# EUROPEAN PATENT APPLICATION

(11) **EP 4 636 858 A1**
(43) Date of publication of application: **22.10.2025**
(21) Application number: 24840115.0
(22) Date of filing: 11.07.2024
(51) Int. Cl.: H01M 4/36, H01M 4/525, H01M 4/505, C01G 53/00, H01M 10/052, H01M 10/0562, H01M 4/02

(54) **POSITIVE ELECTRODE ACTIVE MATERIAL FOR LITHIUM SECONDARY BATTERY, METHOD FOR PRODUCING SAME, AND LITHIUM SECONDARY BATTERY COMPRISING SAME**

(30) Priority: 12.07.2023 KR 20230090443; 09.07.2024 KR 20240090713
(71) Applicant: LG CHEM, LTD., Seoul 07336 (KR); UIF (University Industry Foundation), Yonsei University, Seoul 03722 (KR)
(72) Inventor: PARK, Youngju, Daejeon 34122 (KR); JUNG, Yoon Seok, Seoul 06288 (KR); KIM, Heon, Daejeon 34122 (KR); JUNG, Soonhwa, Daejeon 34122 (KR); LEE, Seungho, Daejeon 34122 (KR); SON, Jun Pyo, Seoul 03725 (KR)
(74) Representative: Hoffmann Eitle
(86) International application number: PCT/KR2024/009957
(87) International publication number: WO 2025/014305

(57) **Abstract**

The present invention relates to a positive electrode active material for a lithium secondary battery, a method for producing the same, and a lithium secondary battery including the same. According to the present invention, there are provided a positive electrode active material for a lithium secondary battery capable of exhibiting excellent cycle-life characteristics and safety by suppressing side reactions with an electrolyte, a method for producing the same, and a lithium secondary battery including the same.

## Description

### Technical Field

### Cross-Reference to Related Application(s)

This application claims the benefit of priority based on Korean Patent Application No. 10-2023-0090443, filed on July 12, 2023, and Korean Patent Application No. 10-2024-0090713, filed on July 9, 2024, and all the contents disclosed in the documents of said Korean Patent Applications are incorporated as part of the present specification.

The present invention relates to a positive electrode active material for a lithium secondary battery, a method for producing the same, and a lithium secondary battery including the same.

### Background Art

As the demand for various electronic devices increases, the demand for lithium secondary batteries as an energy source therefor is rapidly increasing. Recently, lithium secondary batteries have been widely used as a power source for mobility hardware such as electric vehicles (EVs) and hybrid electric vehicles (HEVs). Accordingly, many attempts have been made to improve the charge/discharge efficiency and cycle-life characteristics of lithium secondary batteries.

Lithium secondary batteries that use flammable organic dispersion media as electrolytes are likely to overheat and catch fire in the event of a short circuit. Accordingly, there has been increased interest in all-solid-state batteries that use solid electrolytes instead of liquid electrolytes.

All-solid-state batteries use solid electrolytes such as polymer electrolytes, inorganic electrolytes, and organic-inorganic composite electrolytes, and have relatively good safety because they do not include flammable organic dispersion media.

In an all-solid-state battery, the positive electrode composite layer is mainly composed of a positive electrode active material, a solid electrolyte, and a conductive material. A sulfide-based solid electrolyte with excellent lithium ion conductivity may be used as the solid electrolyte.

However, the sulfide-based solid electrolyte has a problem in that, when it comes into contact with a lithium oxide-based positive electrode active material that is widely used in the art, it may form new layers such as a resistance layer due to diffusion of metal elements and a lithium-deficient layer due to a potential difference, thereby degrading the performance of the battery.

To solve the above problem, many attempts have been being made to improve battery performance by modifying the surface of the positive electrode active material.

### DISCLOSURE

### Technical Problem

The present invention is intended to provide a positive electrode active material for a lithium secondary battery capable of exhibiting excellent cycle-life characteristics and safety by suppressing side reactions with an electrolyte.

The present invention is intended to provide a method for producing the positive electrode active material for a lithium secondary battery.

Further, the present invention is intended to provide a lithium secondary battery including the positive electrode active material for a lithium secondary battery.

### Technical Solution

According to one embodiment of the invention, there is provided a positive electrode active material for a lithium secondary battery, including lithium transition metal oxide particles and a coating layer positioned on the lithium transition metal oxide particles, wherein the coating layer includes lithium (Li), tantalum (Ta), zinc (Zn), and oxygen (O).

According to another embodiment of the invention, there is provided a method for producing a positive electrode active material for a lithium secondary battery, including steps of:
preparing lithium transition metal oxide particles;
preparing a precursor mixture including a lithium (Li) precursor, a tantalum (Ta) precursor, and a zinc (Zn) precursor;
coating the lithium transition metal oxide particles with the precursor mixture; and
heat-treating the lithium transition metal oxide particles, coated with the precursor mixture, under an oxygen atmosphere.

According to still another embodiment of the invention, there is provided a lithium secondary battery including: a positive electrode including the positive electrode active material; a negative electrode; and an electrolyte.

Hereinafter, a positive electrode active material for a lithium secondary battery, a method for producing the same, and a lithium secondary battery including the same, particularly an all-solid-state lithium secondary battery, according to embodiments of the invention, will be described in more detail

The terms or words used in the specification and claims are not to be construed as being limited to their ordinary or dictionary meanings, but should be rather interpreted as meanings and concepts consistent with the technical spirit of the present invention, based on the principle that the inventor may define terms and concepts to describe his/her invention in the best way.

Unless otherwise defined in the present specification, all technical and scientific terms have the same meaning as commonly understood by one of ordinary skill in the art to which the present invention pertains. The terms used in the present invention are for the purpose of effectively describing particular embodiments only, and are not intended to limit the present invention.

The singular forms used in the present specification are intended to include plural forms as well, unless the context clearly indicates otherwise.

The term "including" as used in the present specification specifies a particular characteristic, region, integer, step, operation, element, and/or component, but does not exclude the presence or addition of other particular characteristics, regions, integers, steps, operations, elements, components, and/or groups.

The present invention may be subjected to various modifications and may have various forms, and thus specific embodiments will be exemplified and described in detail below. However, this is not intended to limit the present invention to a specific disclosure form, but should be understood to include all modifications, equivalents, or substitutes included in the spirit and technical scope of the present invention.

In the present specification, when the positional relationship between two parts is described using, for example, "on", "above", "below", "next to", or the like, one or more other parts may be located between the two parts unless the expression "directly" or "immediately" is used.

In the present specification, when a temporal relationship is described using, for example, "after ....", "following ....", "subsequent to ....", "before ...", or the like, it may also include non-continuous cases unless the expression "immediately" or "directly" is used.

The term "at least one" in the present specification should be understood to include all possible combinations that can be suggested from one or more relevant items.

According to one embodiment of the invention, there is provided a positive electrode active material for a lithium secondary battery, including lithium transition metal oxide particles and a coating layer positioned on the lithium transition metal oxide particles, wherein the coating layer includes lithium (Li), tantalum (Ta), zinc (Zn), and oxygen (O).

As a result of continued studies, the present inventors have found that a positive electrode active material having a Li-Zn-Ta-O coating layer positioned on lithium transition metal oxide particles is capable of exhibiting excellent cycle-life characteristics and safety by suppressing side reactions with an electrolyte.

The Li-Zn-Ta-O coating layer is a buffer layer positioned to minimize direct contact between the lithium transition metal oxide particles and the electrolyte. The Li-Zn-Ta-O coating layer can suppress the formation of a resistance layer caused by contact between the lithium transition metal oxide particles and the electrolyte, and mitigate the irreversible phase transition of the lithium transition metal oxide particles. Accordingly, the positive electrode active material for a lithium secondary battery can exhibit excellent cycle-life characteristics and safety compared to a positive electrode active material on which the coating layer is not formed, and enables the provision of a lithium secondary battery with excellent cycle-life and rate capability characteristics.

Furthermore, some of the materials of the coating layer may be doped onto the surface of the lithium transition metal oxide particles in the positive electrode active material, thereby improving the structural stability of the positive electrode active material.

The positive electrode active material for a lithium secondary battery includes the lithium transition metal oxide particles.

As the lithium transition metal oxide particles, any material capable of reversible intercalation and deintercalation of lithium ions may be used without particular limitation. The lithium transition metal oxide particles may include a conventionally known oxide containing lithium, a transition metal, and oxygen. The lithium transition metal oxide particles include a compound exhibiting a higher charge/discharge potential than a material used as a negative electrode active material.

For example, the lithium transition metal oxide particles may include at least one compound selected from the group consisting of LiₐA_{1-b}R_{b}D₂ (0.90≤a≤1.8, 0≤b≤0.5); LiₐE_{1-b}R_{b}O_{2-c}D_{c} (0.90≤a≤1.8, 0≤b≤0.5, 0≤c≤0.05); LiE_{2-b}R_{b}O_{4-c}D_{c} (0≤b≤0.5, 0≤c≤0.05); LiₐNi_{1-b-c}Co_{b}R_{c}D_{d} (0.90≤a≤1.8, 0≤b≤0.5, 0≤c≤0.05, 0<d≤2); LiₐNi_{1-b-c}Co_{b}R_{c}O_{2-d}Z_{d} (0.90≤a≤1.8, 0≤b≤0.5, 0≤c≤0.05, 0<d<2); LiₐNi_{1-b-c}Co_{b}R_{c}O_{2-d}Z₂ (0.90≤a≤1.8, 0≤b≤0.5, 0≤c≤0.05, 0<d<2); LiₐNi_{1-b-c}Mn_{b}R_{c}D_{d} (0.90≤a≤1.8, 0≤b≤0.5, 0≤c≤0.05, 0<d≤2); LiₐNi_{1-b-c}Mn_{b}R_{c}O_{2-d}Z_{d} (0.90≤a≤1.8, 0≤b≤0.5, 0≤c≤0.05, 0<d<2); LiₐNi_{1-b-c}Mn_{b}R_{c}O_{2-d}Z₂ (0.90≤a≤1.8, 0≤b≤0.5, 0≤c≤0.05, 0<d<2); LiₐNi_{b}E_{c}G_{d}O₂ (0.90≤a≤1.8, 0≤b≤0.9, 0≤c≤0.5, 0.001≤d≤0.1.); LiₐNi_{b}Co_{c}Mn_{d}GₑO₂ (0.90≤a≤1.8, 0≤b≤0.9, 0≤c≤0.5, 0≤d≤0.5, 0.001≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMnG_{b}O₂ (0.90≤a≤1.8, 0.001≤b≤0.1); LiₐMn₂G_{b}O₄ (0.90≤a≤1.8, 0.001≤b≤0.1); QO₂; QS₂; LiQS₂; V₂O₅; LiV₂O₅; LiTO₂; LiNiVO₄; Li_{(3-f)}J₂(PO₄)₃ (0≤f≤2); Li_{(3-f)}Fe₂(PO₄)₃ (0≤f≤2); and LiFePO₄.

In the above-exemplified compounds, A is Ni, Co, Mn, or any combination thereof; R is Al, Ni, Co, Mn, Cr, Fe, Mg, Sr, V, a rare earth element, any combination thereof; D is O, F, S, P, or a combination thereof; E is Co, Mn, or any combination thereof; Z is F, S, P, or any combination thereof; G is Al, Cr, Mn, Fe, Mg, La, Ce, Sr, V, or any combination thereof; Q is Ti, Mo, Mn, or any combination thereof; T is Cr, V, Fe, Sc, Y, or any combination thereof; and J is V, Cr, Mn, Co, Ni, Cu, or any combination thereof.

The lithium transition metal oxide particles may be primary particles or secondary particles formed by agglomeration of multiple primary particles.

The lithium transition metal oxide particles may have a particle diameter of 2 µm to 50 µm, or 2 µm to 25 µm, or 4 µm to 25 µm, or 4 µm to 20 µm, or 4 µm to 15 µm.

If the particle diameter of the lithium transition metal oxide particles is excessively small, it may be difficult to control the particles, which may cause difficulties in the production process. On the other hand, if the particle diameter of the lithium transition metal oxide particles is excessively large, losses may occur in terms of rolling density, capacity, etc. Therefore, it is preferable that the lithium transition metal oxide particles have a particle diameter within the above-described range.

The particle diameter of the lithium transition metal oxide particles may be determined from a scanning electron microscope (SEM) image or transmission electron microscope (TEM) image taken of the particles.

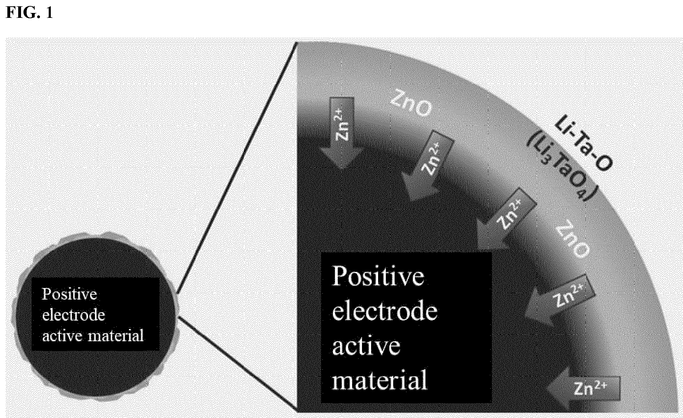

As shown in FIG. 1, the positive electrode active material for a lithium secondary battery includes a coating layer (hereinafter referred to as Li-Zn-Ta-O coating layer) including lithium (Li), tantalum (Ta), zinc (Zn), and oxygen (O), positioned on the lithium transition metal oxide particles.

In the conventional art, there have been many attempts to improve battery performance by surface modification of positive electrode active materials. For example, a phosphate-based coating layer was used, but in this case, there was still a problem of low ionic conductivity, and there was still a problem of structural collapse of a Ni-rich positive electrode active material due to a change in the volume thereof. Thus, there has been a need for an oxide-based coating that is effective even with low-temperature heat treatment.

Meanwhile, tantalum (Ta) is a material that can suppress the formation of NiO when doped on the surface of a positive electrode active material, due to its large difference in bonding energy with oxygen. The present inventors have studied a oxide-based coating including tantalum (Ta), and as a result, have found that, when a coating layer including lithium (Li), tantalum (Ta), zinc (Zn), and oxygen (O) is applied onto lithium transition metal oxide particles, the coating layer acts as a protective layer at the interface between a positive electrode active material and an electrolyte, and at the same time, a portion of the coating material diffuses to the surface of the lithium transition metal oxide particles in the positive electrode active material, resulting in improvement in structural stability, thereby completing the present invention.

It has been found that, when the coating layer includes lithium (Li), tantalum (Ta), zinc (Zn), and oxygen (O), tantalum (Ta) functions to preserve the coating layer, thereby preventing direct contact with reactive materials, and zinc (Zn) diffuses to the surface of the lithium transition metal oxide particles in the positive electrode active material, thereby hindering the migration of nickel (Ni) within the particles, thus helping to stabilize the structure of the positive electrode active material, whereby the positive electrode active material exhibits better cycle-life characteristics and safety.

According to one embodiment, tantalum (Ta) and zinc (Zn) elements may be uniformly distributed in the coating layer.

According to one embodiment, even if the Li-Zn-Ta-O coating layer is formed on the lithium transition metal oxide particles, the layered structure inside the positive electrode active material for a lithium secondary battery may be maintained.

According to one embodiment, the molar ratio of lithium (Li): tantalum (Ta): zinc (Zn) in the coating layer may be 3: 1: 1.

According to one embodiment, the coating layer may include zinc oxide particles.

According to one embodiment, the coating layer may include lithium tantalum oxide particles.

According to one embodiment, the coating layer may include at least one of LiTaO₃ and Li₃TaO₄.

According to one embodiment, the coating layer may include ZnO particles.

According to one embodiment, the ZnO particles may have a hexagonal crystal structure.

According to one embodiment, the coating layer may include Li₃TaO₄ particles.

According to one embodiment, the Li₃TaO₄ particles may have a monoclinic crystal structure.

According to one embodiment, at least a portion of the zinc oxide particles and lithium tantalum oxide particles in the coating layer may have a composite form of ZnO-LiTaO.

According to one embodiment, the coating layer may include a composite compound of ZnO-Li₃TaO₄ and/or Li₂O-ZnO-LiTaO₃.

Meanwhile, some of the materials of the coating layer may be doped onto the surface of the lithium transition metal oxide particles in the positive electrode active material to improve the structural stability of the positive electrode active material.

For example, as shown in FIG. 1, zinc (Zn) may partially diffuse to the surface of the lithium transition metal oxide particles in the positive electrode active material, thereby exhibiting the effect of surface doping. In this case, the zinc diffused to the surface of the lithium transition metal oxide particles may be in the form of zinc ions (Zn²⁺).

According to one embodiment, in the positive electrode active material for a lithium secondary battery, a region from the surface of the lithium transition metal oxide particle to a depth of 15 nm from the surface may contain zinc (Zn) diffused from the coating layer.

According to one embodiment, in the positive electrode active material for a lithium secondary battery, a region from the surface of the lithium transition metal oxide particle to a depth of 25 nm from the surface may contain zinc (Zn) diffused from the coating layer.

According to one embodiment, in the positive electrode active material for a lithium secondary battery, a region from the surface of the lithium transition metal oxide particle to a depth of 30 nm from the surface may contain zinc (Zn) diffused from the coating layer.

According to one embodiment, in the positive electrode active material for a lithium secondary battery, a region from the surface of the lithium transition metal oxide particle to a depth of 15 nm from the surface may contain tantalum (Ta) diffused from the coating layer.

According to one embodiment, in the positive electrode active material for a lithium secondary battery, a region from the surface of the lithium transition metal oxide particle to a depth of 25 nm from the surface may contain tantalum (Ta) diffused from the coating layer.

According to one embodiment, in the positive electrode active material for a lithium secondary battery, a region from the surface of the lithium transition metal oxide particle to a depth of 30 nm from the surface may contain tantalum (Ta) diffused from the coating layer.

According to one embodiment, when the total content of nickel (Ni), tantalum (Ta), and zinc (Zn) present in a region from the surface of the lithium transition metal oxide particle to a depth of 15 nm from the surface is taken as 100%, the content of zinc (Zn) present in the region may be 0.4% or more, or 0.5% or more, or 0.6% or more, and less than 1%, 0.9% or less, or 0.8% or less.

According to one embodiment, when the total content of nickel (Ni), tantalum (Ta), and zinc (Zn) present in a region from the surface of the lithium transition metal oxide particle to a depth of 15 nm from the surface is taken as 100%, the content of tantalum (Ta) present in the region may be 0.1% or more, or 0.2% or more, or 0.3% or more, and 0.8% or less, 0.7% or less, or 0.6% or less.

According to one embodiment, when the total content of nickel (Ni), tantalum (Ta), and zinc (Zn) present in a region from the surface of the lithium transition metal oxide particle to a depth of 25 nm from the surface is taken as 100%, the content of zinc (Zn) present in the region may be 0.3% or more, or 0.4% or more, or 0.5% or more, and 0.9% or less, or 0.8% or less, or 0.7% or less.

According to one embodiment, when the total content of nickel (Ni), tantalum (Ta), and zinc (Zn) present in a region from the surface of the lithium transition metal oxide particle to a depth of 25 nm from the surface is taken as 100%, the content of tantalum (Ta) present in the region may be 0.01% or more, or 0.05% or more, or 0.1% or more, and 0.5% or less, 0.4% or less, or 0.3% or less.

According to one embodiment, the coating layer may be positioned on 60% or more, or 70% or more, or 80% or more, or 90% or more, or 100% of the entire surface area of the lithium transition metal oxide particle. In this case, although the upper limit of the coating area of the coating layer is not particularly limited, it may be, for example, 100% or less, 99% or less, 98% or less, 97% or less, 96% or less, 95% or less, 94% or less, 93% or less, 92% or less, 91% or less, or 90% or less. However, in order to ensure that the above-described effect of introduction of the coating layer can be sufficiently exhibited, it is preferable that the coating layer be positioned over the entire surface area of the lithium transition metal oxide particle.

If portions of the surface of the lithium transition metal oxide particle, on which the coating layer is not formed, account for 40% or more of the surface area of the lithium transition metal oxide particle, a problem may arise in that the lithium transition metal oxide particle and the electrolyte react in these portions to form high-resistance sites.

According to one embodiment, the coating layer may be included in an amount of 0.1 to 10 parts by weight, or 0.5 to 10 parts by weight, or 1.0 to 10 parts by weight, based on 100 parts by weight of the positive electrode active material for a lithium secondary battery.

In order to ensure that the above-described effect of introduction of the coating layer can be sufficiently exhibited, it is preferable that the coating layer be included in an amount of 0.1 part by weight or more, or 0.5 part by weight or more, or 1.0 part by weight or more, based on 100 parts by weight of the positive electrode active material for a lithium secondary battery. However, if the coating layer is included in an excessively large amount, the performance of the positive electrode active material developed from the lithium transition metal oxide particles may deteriorate. Therefore, it is preferable that the coating layer be included in an amount of 10 parts by weight or less based on 100 parts by weight of the positive electrode active material for a lithium secondary battery.

The coating layer may be formed to a thickness capable of stably suppressing the reaction between the lithium transition metal oxide particles and the electrolyte while ensuring lithium ion conductivity.

According to one embodiment, the coating layer may have a thickness of 1 nm to 200 nm, or 1 nm to 150 nm, or 1 nm to 100 nm.

If the thickness of the coating layer is excessively small, it may be difficult to ensure the stability of the coating layer. In addition, if the thickness of the coating layer is excessively small, a problem may arise in that uncoated portions occur on the surface of the lithium transition metal oxide particle, and the lithium transition metal oxide particle and the electrolyte react in the portions to form high-resistance sites. However, if the thickness of the coating layer is excessively large, lithium ion conductivity may decrease.

The thickness of the coating layer may be calculated by comparing the particle diameters of the lithium transition metal oxide particle and the positive electrode active material for a lithium secondary battery. Alternatively, the thickness of the coating layer may be determined by observing the cross-section of the positive electrode active material using a transmission electron microscope (TEM).

According to one embodiment, the lithium secondary battery may be an all-solid-state battery.

According to one embodiment, the all-solid-state battery may be a sulfide-based all-solid-state battery.

According to another embodiment of the invention, there is provided a method for producing a positive electrode active material for a lithium secondary battery, including steps of:
preparing lithium transition metal oxide particles;
preparing a precursor mixture including a lithium (Li) precursor, a tantalum (Ta) precursor, and a zinc (Zn) precursor;
coating the lithium transition metal oxide particles with the precursor mixture; and
heat-treating the lithium transition metal oxide particles, coated with the precursor mixture, under an oxygen atmosphere.

First, a step of preparing lithium transition metal oxide particles is performed.

As the lithium transition metal oxide particles, a conventionally known oxide containing lithium, a transition metal, and oxygen can be prepared. For the lithium transition metal oxide particles, reference is made to the content described above.

Next, a step of preparing a precursor mixture including a lithium (Li) precursor, a tantalum (Ta) precursor, and a zinc (Zn) precursor is performed.

The precursor mixture may be prepared in a solution phase by adding the lithium precursor, the tantalum precursor, and the zinc precursor to an appropriate solvent such as an alcohol, followed by stirring.

As the lithium precursor, an oxide containing lithium, such as Li₂O, CH₃OLi, or CH₃CH₂OLi, may be used without particular limitation.

As the tantalum precursor, an oxide containing tantalum, such as (CH₃O)₅Ta or (CH₃CH₂O)₅Ta, may be used without particular limitation.

As the zinc precursor, a zinc-containing oxide, ammonium salt or acetate, etc. may be used without particular limitation.

According to one embodiment, the precursor mixture may include the precursors such that lithium (Li), tantalum (Ta), zinc (Zn) and oxygen (O) meet the desired composition.

Preferably, the precursor mixture may include the precursors such that the molar ratio of lithium (Li): tantalum (Ta): zinc (Zn) is 3: 1: 1.

Next, a step of coating the lithium transition metal oxide particles with the precursor mixture is performed.

According to one embodiment, the coating step may be performed by adding the lithium transition metal oxide particles to the precursor mixture in a solution phase, stirring the resulting mixture, and drying the stirred mixture to remove the solvent included in the precursor mixture.

By controlling the composition and solid content of the precursor mixture in the coating step, it is possible to control the content, thickness, area ratio, etc. of the coating layer that is applied to the positive electrode active material.

Next, a step of heat-treating the lithium transition metal oxide particles coated with the precursor mixture under an oxygen atmosphere is performed.

According to one embodiment, the heat treatment may be performed at a temperature of 300°C or higher, or 300°C to 1,000°C, or 350°C to 1,000°C, or 350 °C to 900°C, or 400°C to 800°C.

If the heat treatment temperature is excessively low, the adhesion and density of the Li-Zn-Ta-O coating layer formed by the heat treatment may decrease, and the contact efficiency of the Li-Zn-Ta-O coating layer may decrease. However, if the heat treatment temperature is excessively high, it may cause material deformation of the lithium transition metal oxide particles or the coating layer. Therefore, it is preferable that the heat treatment be performed within the temperature range described above.

In addition, the heat treatment may be performed for 0.5 to 12 hours at the above-described heat treatment temperature. The heat treatment time may be determined in consideration of the time required for stabilization of the Li-Zn-Ta-O coating layer.

By performing the steps described above, it is possible to produce a positive electrode active material for a lithium secondary battery including the lithium transition metal oxide particles and the coating layer positioned on the lithium transition metal oxide particles.

A positive electrode active material for a lithium secondary battery produced by the above-described production method includes lithium transition metal oxide particles and a coating layer positioned on the lithium transition metal oxide particles, wherein the coating layer may include zinc oxide particles and lithium tantalum oxide particles.

The coating layer may include at least one of LiTaO₃ and Li₃TaO₄.

The coating layer may include ZnO particles.

The ZnO particles may have a hexagonal crystal structure.

The coating layer may include Li₃TaO₄ particles.

The Li₃TaO₄ particles may have a monoclinic crystal structure.

At least a portion of the zinc oxide particles and lithium tantalum oxide particles in the coating layer may have a composite form of ZnO-LiTaO.

The coating layer may include a composite compound of ZnO-Li₃TaO₄ and/or Li₂O-ZnO-LiTaO₃.

The description of the coating layer is as described above.

According to another embodiment of the invention, there is provided a lithium secondary battery including: a positive electrode including the positive electrode active material described above; a negative electrode; and an electrolyte.

The lithium secondary battery has a positive electrode including the above-described positive electrode active material. Accordingly, the lithium secondary battery may exhibit excellent cycle-life characteristics and rate capability characteristics while having excellent cycle-life characteristics and safety.

Accordingly, the lithium secondary battery may be used as an energy source with improved performance and safety in the field of portable electronic devices such as mobile phones, notebook computers, tablet computers, mobile batteries, and digital cameras; and in the field of transportation means such as electric vehicles, electric motorcycles, and personal mobility devices.

The positive electrode may be fabricated using a positive electrode material including the positive electrode active material, a conductive material, and an electrolyte.

According to one embodiment, the positive electrode active material may be included in an amount of 70 wt% to 95 wt% based on the total weight of the positive electrode material.

Specifically, the content of the positive electrode active material may be 70 wt% or more, or 80 wt% or more, or 85 wt% or more, and 95 wt% or less, or 93 wt% or less, or 90 wt% or less, based on the total weight of the positive electrode material. Preferably, the content of the positive electrode active material may be 70 wt% to 95 wt%, or 80 wt% to 95 wt%, or 85 wt% to 93 wt%, or 85 wt% to 90 wt%, based on the total weight of the positive electrode material.

The conductive material is used to provide conductivity to the electrode.

Any conductive material that has electronic conductivity without causing a chemical change in the battery may be used without particular limitation. Non-limiting examples of the conductive material include carbon-based materials such as carbon black, acetylene black, Ketjen black, channel black, furnace black, lamp black, summer black, and carbon fiber; graphite such as natural graphite or artificial graphite; metal powder or metal fiber such as copper, nickel, aluminum, or silver; conductive whiskey such as zinc oxide or potassium titanate; conductive metal oxides such as titanium oxide; or conductive polymers such as polyphenylene derivatives. As the conductive material, one or a mixture of two or more of the examples described above may be used.

The content of the conductive material may be adjusted within a range in which the conductive material exhibits an appropriate level of conductivity without causing a decrease in the capacity of the battery. Preferably, the content of the conductive material may be 1 wt% to 10 wt%, or 1 wt% to 5 wt%, based on the total weight of the positive electrode material.

As the electrolyte, any electrolyte known to be applicable to a lithium secondary battery in the art to which the present invention pertains may be used without particular limitation. For example, the electrolyte may be an organic liquid electrolyte, an inorganic liquid electrolyte, a solid polymer electrolyte, a gel-type polymer electrolyte, a solid inorganic electrolyte, a molten inorganic electrolyte, or the like.

For example, the electrolyte may be a solid inorganic electrolyte. As the solid inorganic electrolyte, a sulfide-based solid electrolyte may preferably be used. As the sulfide-based solid electrolyte, a solid electrolyte containing sulfur and lithium and having lithium ion conductivity may be used. For example, the sulfide-based solid electrolyte may be at least one compound selected from the group consisting of Li₆PS₅Cl, Li₂S-SiS₂, LiI-Li₂S-SiS₂, LiI-Li₂S-P₂S₅, LiI-Li₂S-B₂S₃, Li₃PO₄-Li₂S-Si₂S, Li₃PO₄-Li₂S-SiS₂, LiPO₄-Li₂S-SiS, LiI-Li₂S-P₂O₅, LiI-Li₃PO₄-P₂S₅, and Li₂S-P₂S₅.

In addition, as the electrolyte, the sulfide-based solid electrolyte may be used in combination with a crystalline oxide, an oxide-based amorphous solid electrolyte, or a crystalline oxynitride. For example, as the electrolyte, the sulfide-based solid electrolyte may be used in combination with a crystalline oxide such as Li_{1.3}Al_{0.3}Ti_{0.7}(PO₄)₃, Li_{1+x+y}AₓTi₂₋ₓSi_{y}P_{3-y}O₁₂ (where A is Al or Ga; 0≤x≤0.4; 0<y≤0.6), [(B_{1/2}Li_{1/2})_{1-z}C_{z}]TiO₃ (B is La, Pr, Nd, or Sm; C is Sr or Ba; 0≤z≤0.5), Li₅La₃Ta₂O₁₂, Li₇La₃Zr₂O₁₂, Li₆BaLa₂Ta₂O₁₂, or Li_{3.6}Si_{0.6}P_{0.4}O₄; an oxide-based amorphous solid electrolyte such as Li₂O-B₂O₃-P₂O₅, Li₂O-SiO₂, Li₂O-B₂O₃, or Li₂O-B₂O₃-ZnO; a crystalline oxynitride such as Li₃PO_{(4-3/2w)}N_{w} (w < 1); and/or LiI, LiI-Al₂O₃, Li₃N, Li₃N-LiI-LiOH, or the like.

As another example, the electrolyte may contain a non-aqueous organic solvent and a lithium salt. As the non-aqueous organic solvent, any non-aqueous organic solvent may be used without particular limitation as long as it can act as a medium through which ions involved in the electrochemical reaction in the battery can migrate. Specific examples of the non-aqueous organic solvent include ester-based solvents such as methyl acetate, ethyl acetate, γ-butyrolactone, and ε-caprolactone; ether-based solvents such as dibutyl ether and tetrahydrofuran; ketone-based solvents such as cyclohexanone; aromatic hydrocarbon-based solvents such as benzene and fluorobenzene; carbonate-based solvents such as dimethyl carbonate (DMC), diethyl carbonate (DEC), methyl ethyl carbonate (MEC), ethyl methyl carbonate (EMC), ethylene carbonate (EC), and propylene carbonate (PC); alcohol-based solvents such as ethyl alcohol and isopropyl alcohol; nitriles such as R-CN (R is a C2 to C20 straight-chain, branched or cyclic hydrocarbon group, which may include a double-bond aromatic ring or ether bond); amides such as dimethylformamide; dioxolanes such as 1,3-dioxolane; and sulfolanes.

The lithium salt contained in the electrolyte is dissolved in the non-aqueous organic solvent and acts as a source of lithium ions in the battery, enabling the basic operation of the lithium secondary battery and promoting the migration of lithium ions between the positive and negative electrodes. Specific examples of the lithium salt include LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiFSI, LiTFSI, LiCl, LiI, and LiB(C₂O4)₂. Preferably, the lithium salt may be LiPF₆, LiFSI, LiTFSI, or any mixture thereof. The lithium salt may be contained in the electrolyte at a concentration of 0.1 M to 2.0 M. The lithium salt contained in the above concentration range may impart appropriate conductivity and viscosity to the electrolyte, thereby enabling the electrolyte to exhibit excellent electrolyte performance.

Optionally, the positive electrode material may further include a binder. The binder may be used to facilitate the attachment of the positive electrode material to a current collector.

Non-limiting examples of the binder include polyvinyl alcohol, carboxymethyl cellulose, hydroxypropyl cellulose, diacetyl cellulose, polyvinyl chloride, carboxylated polyvinyl chloride, polyvinyl fluoride, polymers containing ethylene oxide, polyvinylpyrrolidone, polyurethane, polytetrafluoroethylene, polyvinylidene fluoride, polyethylene, polypropylene, styrene-butadiene rubber, acrylated styrene-butadiene rubber, epoxy resin, nylon, and the like. As the binder, one or a mixture of two or more of the above-described examples may be used.

The content of the binder may be adjusted within a range in which the binder exhibits an appropriate level of adhesiveness without causing a decrease in the capacity of the battery. Preferably, the content of the binder may be 1 wt% to 10 wt%, or 1 wt% to 5 wt%, based on the total weight of the positive electrode material.

The negative electrode may be fabricated by applying a negative electrode material including a negative electrode active material, a conductive material, and an electrolyte onto a current collector, followed by drying.

According to one embodiment, the negative electrode active material includes a compound exhibiting a lower charge/discharge potential than the positive electrode active material. In the present invention, there is no clear distinction between the positive electrode active material and the negative electrode active material. Based on a comparison of the charge/discharge potentials of two electrode active materials, one exhibiting a relatively high potential may be used as the positive electrode active material, and the other exhibiting a relatively low potential may be used as the negative electrode active material.

For the conductive material included in the negative electrode material, reference is made to the above description of the positive electrode.

As the current collector, any material known to be applicable to an electrode for a lithium secondary battery in the art to which the present invention pertains may be used without particular limitation.

Non-limiting examples of the current collector include stainless steel; aluminum; nickel; titanium; calcined carbon; or aluminum or stainless steel surface-treated with carbon, nickel, titanium, silver, etc.

Preferably, the current collector may have a thickness of 3 µm to 500 µm. In order to increase the adhesion of the electrode material, the current collector may have fine unevenness formed on the surface thereof. The current collector may have various forms such as a film, a sheet, a foil, a net, a porous body, a foam, a non-woven body, etc.

According to one embodiment, the lithium secondary battery may be fabricated by sequentially superimposing the positive electrode, the electrolyte, and the negative electrode, followed by pressure molding.

### Advantageous Effects

According to the present invention, there are provided a positive electrode active material for a lithium secondary battery capable of exhibiting excellent cycle-life characteristics and safety by suppressing side reactions with an electrolyte, a method for producing the same, and a lithium secondary battery including the same.

### Brief Description of Drawings

FIG. 1 is a cross-sectional view schematically showing the structure of a positive electrode active material for a lithium secondary battery according to an embodiment of the present invention.
FIG. 2 shows the results of X-ray diffraction analysis of a Li-Zn-Ta-O coating layer according to one example of the present invention.
FIG. 3 shows the results of transmission electron microscopy-energy dispersive X-ray spectroscopy (TEM-EDS) analysis of a Li-Zn-Ta-O coating layer according to one example of the present invention.
FIG. 4 shows the results of cross-section transmission electron microscopy-energy dispersive X-ray spectroscopy (cross-section TEM-EDS) analysis of a positive electrode active material according to one example of the present invention.
FIG. 5 shows the results of scanning electron microscopy-energy dispersive X-ray spectroscopy (SEM-EDS) analysis of a positive electrode active material according to one example of the invention.
FIG. 6 shows the results of X-ray photoelectron spectroscopy (XPS) analysis of a positive electrode active material according to one example of the present invention.
FIG. 7 shows a depth profile obtained through X-ray photoelectron spectroscopy (XPS) analysis of a positive electrode active material according to one example of the present invention.
FIGS. 8 and 9 show cycle-life test results for lithium secondary batteries according to examples of the present invention and comparative examples.
FIG. 10 shows rate capability test results for lithium secondary batteries according to examples of the present invention and comparative examples.

### Best Mode

According to one embodiment of the invention, there may be provided a positive electrode active material for a lithium secondary battery, including lithium transition metal oxide particles and a coating layer positioned on the lithium transition metal oxide particles, wherein the coating layer includes lithium (Li), tantalum (Ta), zinc (Zn), and oxygen (O).

According to another embodiment of the invention, there may be provided a method for producing a positive electrode active material for a lithium secondary battery, including steps of:
preparing lithium transition metal oxide particles;
preparing a precursor mixture including a lithium (Li) precursor, a tantalum (Ta) precursor, and a zinc (Zn) precursor;
coating the lithium transition metal oxide particles with the precursor mixture; and
heat-treating the lithium transition metal oxide particles, coated with the precursor mixture, under an oxygen atmosphere.

According to still another embodiment of the invention, there may be provided a lithium secondary battery including: a positive electrode including the positive electrode active material; a negative electrode; and an electrolyte.

### Mode for Invention

Hereinafter, the function and effect of the present invention will be described in more detail by way of specific examples of the present invention. However, these examples are presented to help understand the present invention. The following examples are not intended to limit the scope of the present invention in any way, and it will be apparent to those skilled in the art that various changes and modifications are possible within the scope and technical idea of the present invention.

### Example 1

Secondary particles (particle diameter: 4 µm) of LiNi_{0.95}Co_{0.03}Mn_{0.015}Al_{0.005}O₂ were prepared as lithium transition metal oxide particles.

A precursor mixture was prepared by adding lithium ethoxide, tantalum ethoxide, and zinc acetate to ethanol, followed by stirring. The precursor mixture contained the precursors so that the molar ratio of lithium (Li): tantalum (Ta): zinc (Zn) was 3: 1: 1.

2 g of the lithium transition metal oxide particles were mixed with the precursor mixture and stirred for 30 minutes, and the solvent (ethanol) was evaporated using a rotary evaporator for 30 minutes, thereby coating the lithium transition metal oxide particles with the precursor mixture.

The lithium transition metal oxide particles coated with the precursor mixture were heat-treated in a heat treatment furnace at a temperature of 450°C under an oxygen atmosphere for 1 hour to obtain a positive electrode active material having a Li-Zn-Ta-O coating layer positioned on the lithium transition metal oxide particles. The content of the Li-Zn-Ta-O coating layer was 1.5 parts by weight based on 100 parts by weight of the lithium transition metal oxide particles.

The cross-section of the positive electrode active material was observed using a transmission electron microscope, and it was confirmed that the lithium transition metal oxide particles were coated with the coating layer with a thickness of 10 nm.

### Example 2

A positive electrode active material having a Li-Zn-Ta-O coating layer positioned on the lithium transition metal oxide particles was obtained in the same manner as in Example 1, except that the content of the Li-Zn-Ta-O coating layer was set to 1.0 part by weight based on 100 parts by weight of the lithium transition metal oxide particles.

### Example 3

A positive electrode active material having a Li-Zn-Ta-O coating layer positioned on the lithium transition metal oxide particles was obtained in the same manner as in Example 1, except that the content of the Li-Zn-Ta-O coating layer was set to 2.0 part by weight based on 100 parts by weight of the lithium transition metal oxide particles.

### Comparative Example 1

Lithium transition metal oxide particles composed of secondary particles (particle diameter: 4 µm) of LiNi_{0.95}Co_{0.03}Mn_{0.015}Al_{0.005}O₂ were prepared as a positive electrode active material.

### Comparative Example 2

Secondary particles (particle diameter: 4 µm) of LiNi_{0.95}Co_{0.03}Mn_{0.015}Al_{0.005}O₂ were prepared as lithium transition metal oxide particles.

A precursor mixture was prepared by adding lithium ethoxide and zinc acetate to ethanol, followed by stirring. The precursor mixture contained the precursors such that the molar ratio of lithium (Li): zinc (Zn) was 2: 1.

2 g of the lithium transition metal oxide particles were mixed with the precursor mixture and stirred for 30 minutes, and the solvent (ethanol) was evaporated using a rotary evaporator for 30 minutes, thereby coating the lithium transition metal oxide particles with the precursor mixture.

The lithium transition metal oxide particles coated with the precursor mixture were heat-treated in a heat treatment furnace at a temperature of 450°C under an oxygen atmosphere for 1 hour to obtain a positive electrode active material having a coating layer including a Li-Zn-O-based compound positioned on the lithium transition metal oxide particles. The content of the Li-Zn-O-based compound was 1.5 parts by weight based on 100 parts by weight of the lithium transition metal oxide particles.

### Comparative Example 3

Secondary particles (particle diameter: 4 µm) of LiNi_{0.95}Co_{0.03}Mn_{0.015}Al_{0.005}O₂ were prepared as lithium transition metal oxide particles.

A precursor mixture was prepared by adding lithium ethoxide and tantalum ethoxide to ethanol, followed by stirring. The precursor mixture contained the precursors so that the molar ratio of lithium (Li): tantalum (Ta) was 3: 1.

2 g of the lithium transition metal oxide particles were mixed with the precursor mixture and stirred for 30 minutes, and the solvent (ethanol) was evaporated using a rotary evaporator for 30 minutes, thereby coating the lithium transition metal oxide particles with the precursor mixture.

The lithium transition metal oxide particles coated with the precursor mixture were heat-treated in a heat treatment furnace at a temperature of 450°C under an oxygen atmosphere for 1 hour to obtain a positive electrode active material having a coating layer including a Li-Ta-O-based compound (Li₃TaO₄) positioned on the lithium transition metal oxide particles. The content of the Li-Ta-O-based compound was 1.5 parts by weight based on 100 parts by weight of the lithium transition metal oxide particles.

### Comparative Example 4

Secondary particles (particle diameter: 4 µm) of LiNi_{0.95}Co_{0.03}Mn_{0.015}Al_{0.005}O₂ were prepared as lithium transition metal oxide particles.

A precursor mixture was prepared by adding lithium ethoxide and tantalum ethoxide to ethanol, followed by stirring. The precursor mixture contained the precursors so that the molar ratio of lithium (Li): tantalum (Ta) was 1: 1.

2 g of the lithium transition metal oxide particles were mixed with the precursor mixture and stirred for 30 minutes, and the solvent (ethanol) was evaporated using a rotary evaporator for 30 minutes, thereby coating the lithium transition metal oxide particles with the precursor mixture. The lithium transition metal oxide particles coated with the precursor mixture were heat-treated in a heat treatment furnace at a temperature of 450°C under an oxygen atmosphere for 1 hour to obtain a positive electrode active material having a coating layer including a Li-Ta-O-based compound (LiTaO₃) positioned on the lithium transition metal oxide particles. The content of the Li-Ta-O-based compound was 1.5 parts by weight based on 100 parts by weight of the lithium transition metal oxide particles.

### Experimental Example 1

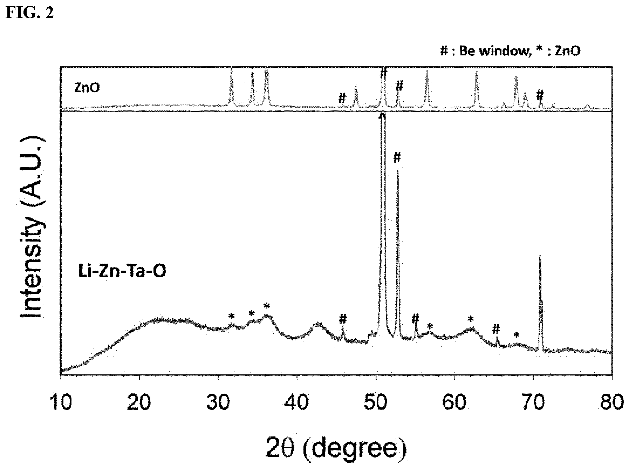

X-ray diffraction analysis (model: MiniFlex600, manufacturer: Rigaku) was performed on the Li-Zn-Ta-O coating layer of the positive electrode active material of Example 1 using CuKα radiation as a radiation source, and the results are shown in FIG. 2. The analysis was performed at 40 kV and 15 mA in the 2θ range of 10° to 80° at a rate of 1.5° per minute.

Referring to FIG. 2, it can be seen that the Li-Zn-Ta-O coating layer generally exhibited a broad X-ray diffraction (XRD) pattern indicating an amorphous or low-crystalline phase, and that the peak of ZnO appeared, indicating that the ZnO formed a composite structure rather than being incorporated into a solid solution.

### Experimental Example 2

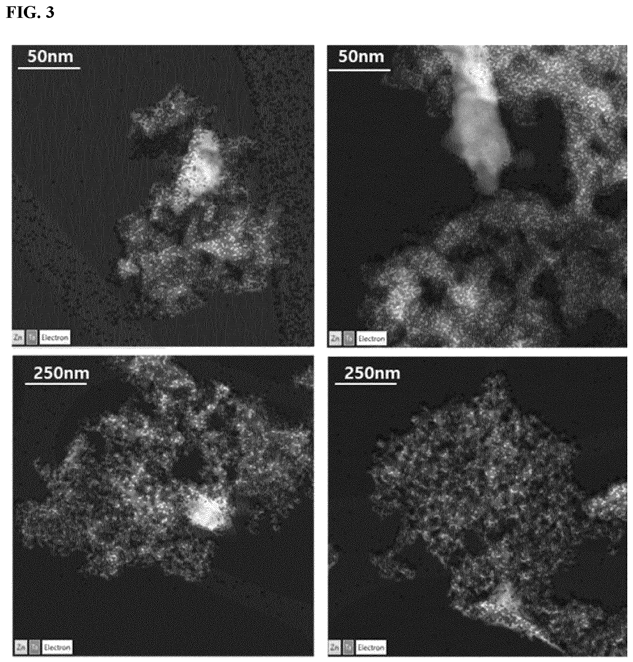

Transmission electron microscopy-energy dispersive X-ray spectroscopy (TEM-EDS) analysis was performed on the Li-Zn-Ta-O coating layer of the positive electrode active material of Example 1 using a transmission electron microscope (model: JEM-ARM 200F (NEOARM), manufacturer: JEOL), and the results are shown in FIG. 3.

FIG. 3 shows that the Li-Zn-Ta-O coating layer had a composite structure of ZnO-LiTaO. This indicates that the ZnO was separated in the matrix rather than being incorporated into a solid solution in the ZnO-LiTaO composite.

### Experimental Example 3

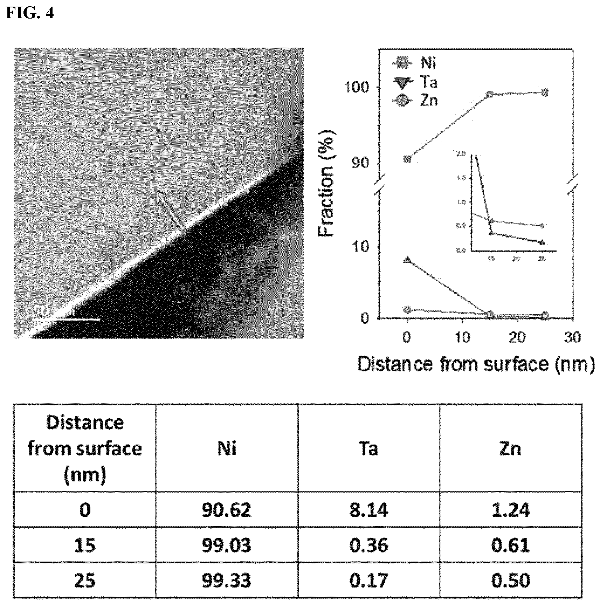

Cross-section transmission electron microscopy-energy dispersive X-ray spectroscopy (cross-section TEM-EDS) analysis was performed on the positive electrode active material of Example 1 using a transmission electron microscope (model: JEM-ARM 200F (NEOARM), manufacturer: JEOL), and the results are shown in FIG. 4.

Referring to FIG. 4, the change in the contents of lithium (Li), tantalum (Ta), and zinc (Zn) as a function of the depth from the surface of the lithium transition metal oxide particle can be seen. As shown therein, the intensity of the Ta signal decreased rapidly within a depth of 15 nm from the surface of the lithium transition metal oxide particle, whereas the Zn signal decreased relatively consistently up to a depth of 25 nm from the surface of the lithium transition metal oxide particles.

This suggests that some materials of the coating layer of the positive electrode active material for a lithium secondary battery according to one example of the present invention diffuse to the surface of the lithium transition metal oxide particles in the positive electrode active material.

### Experimental Example 4

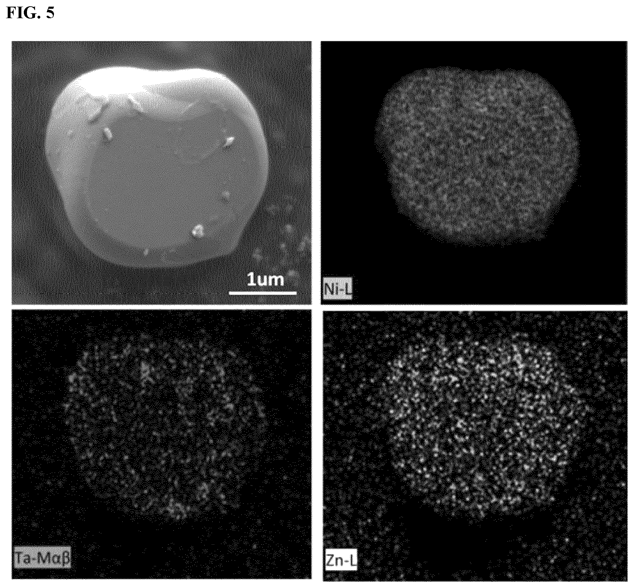

Scanning electron microscopy-energy dispersive X-ray spectroscopy (SEM-EDS) analysis was performed on the positive electrode active material of Example 1 using a scanning electron microscope (model: Crossbeam 540, manufacturer: ZEISS), and the results are shown in FIG. 5.

Referring to FIG. 5, it can be seen that tantalum (Ta) and zinc (Zn) exist on the surface of the lithium transition metal oxide particles in the positive electrode active material.

### Experimental Example 5

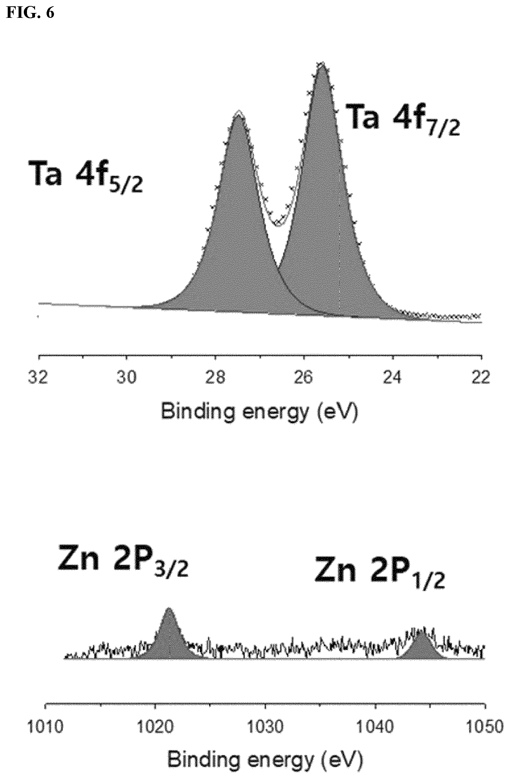

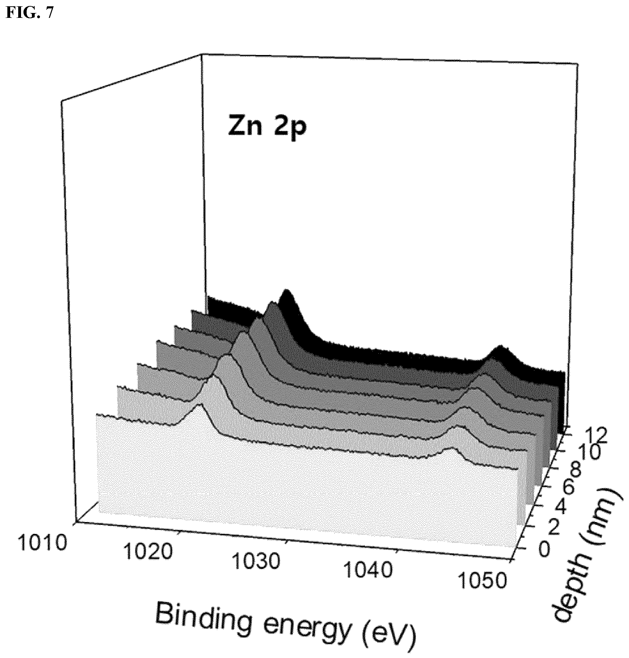

X-ray photoelectron analysis (model: K-alpha, manufacturer: Thermo Fisher Scientific) was performed on the positive electrode active material of Example 1, and the results are shown in FIGS. 6 and 7. The analysis was performed using an Al Kα radiation source under 3 mA conditions.

Referring to FIG. 6, it can be seen that the Zn 2p and Ta 4f XPS spectra of the Li-Zn-Ta-O coating layer show characteristic peaks at 1021.2 eV and 26.2 eV, respectively, indicating that the coating layer contains ZnO and Li₃TaO₄.

FIG. 7 shows the results of performing analysis on elements present in the positive electrode active material of Example 1 while etching the positive electrode active material. As shown therein, Zn could be detected even at a depth of about 12 nm or more from the surface of the lithium transition metal oxide particles in the positive electrode active material, suggesting that some materials of the coating layer diffused to the surface of the lithium transition metal oxide particles in the positive electrode active material.

### Experimental Example 6

All-solid-state battery half-cells were fabricated in the following manner using the positive electrode active materials obtained in the examples and the comparative examples. A positive composite electrode was fabricated by mixing the positive electrode active material, a solid electrolyte (Li₆PS₅Cl) and a conductive material (carbon black) at a mass ratio of 70: 30: 3 in ethanol. A negative composite electrode was fabricated by mixing a negative electrode active material (Li_{0.5}In) and a solid electrolyte (Li₆PS₅Cl) at a mass ratio of 80: 20. The solid electrolyte (Li₆PS₅Cl) was pressed into a pellet shape. The positive composite electrode, the pellet-shaped solid electrolyte, and the negative composite electrode were sequentially superimposed and then then press-molded at 370 MPa, thereby fabricating all-solid-state battery half-cells.

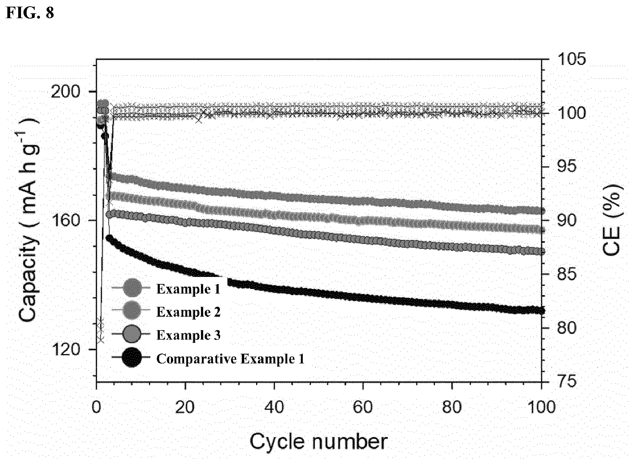

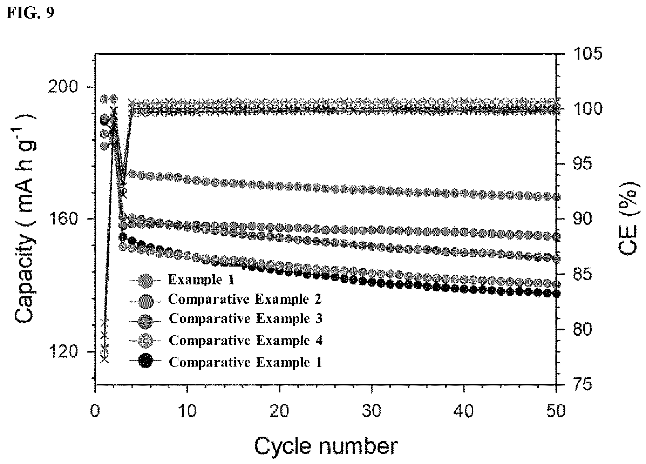

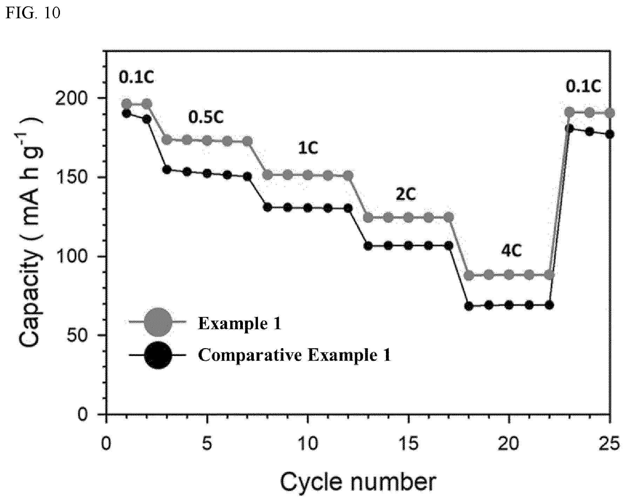

The battery performance of the all-solid-state battery half-cells was evaluated at an operating pressure of 70 MPa at 30 °C, and the results are shown in Table 1 below and FIGS. 8 to 10. At this time, the cycle-life characteristics were evaluated at 0.5 C after 2 cycles at 0.1 C based on 1 C = 200 mA/g.

**[Table 1]**

| Positive electrode active | 1^{st} charge capacity [mA h g⁻¹] | 1^{st} discharge capacity [mA h g⁻¹] | Initial columbic efficiency | 3^{rd} discharge (0.5 C) capacity | 3^{rd}/52^{nd} retention [%] |
|---|---|---|---|---|---|
| material | | | [%] | [mA h g⁻¹] | |
| Example 1 | 243.6 | 196.3 | 80.6 | 173.8 | 95.8 |
| Example 2 | 243.2 | 194.3 | 79.9 | 161.0 | 96.3 |
| Example 3 | 242.3 | 191.1 | 78.9 | 167.8 | 95.7 |
| Comparative Example 1 | 245.1 | 189.6 | 77.5 | 154.5 | 88.7 |
| Comparative Example 2 | 228.5 | 182.0 | 79.6 | 158.0 | 97.7 |
| Comparative Example 3 | 243.3 | 190.5 | 78.3 | 160.6 | 91.9 |
| Comparative Example 4 | 237.7 | 185.8 | 78.2 | 151.6 | 92.4 |

Referring to the results of the Experimental Examples, it was confirmed that the lithium secondary batteries including the positive electrode active materials of the Examples exhibited a high discharge capacity of 191 mA h g⁻¹ or higher in the first cycle at 0.1 C, a capacity of 161 mA h g⁻¹ or higher even at 0.5 C, and high performance corresponding to a cycle life of 95% or more.

In comparison with this, the lithium secondary batteries including the positive electrode active materials of the Comparative Examples exhibited lower discharge capacity than those of the Examples in the first cycle at 0.1 C, and also exhibited lower discharge capacity even at 0.5 C.

It was confirmed that some of the Comparative Examples exhibited low capacity, indicating excellent cycle-life characteristics, but they generally exhibited inferior performance to that of Example 1.

Although the present invention has been described above by way of limited embodiments, the present invention is not limited thereto. It should be understood that the present invention can be variously changed and modified by those skilled in the art without departing from the technical sprit of the present invention and the range of equivalents to the appended claims.

### Industrial Applicability

The present invention is applicable to a positive electrode active material for a lithium secondary battery and a lithium secondary battery including the same.

## Claims

1. A positive electrode active material for a lithium secondary battery, comprising lithium transition metal oxide particles and a coating layer positioned on the lithium transition metal oxide particles,
wherein the coating layer comprises lithium (Li), tantalum (Ta), zinc (Zn), and oxygen (O).

2. The positive electrode active material according to claim 1, wherein the coating layer is comprised in an amount of 0.1 to 10 parts by weight based on 100 parts by weight of the positive electrode active material.

3. The positive electrode active material according to claim 1, wherein the coating layer has a thickness of 1 nm to 200 nm.

4. The positive electrode active material according to claim 1, wherein the coating layer is positioned on 60% or more of the entire surface area of the lithium transition metal oxide particle.

5. The positive electrode active material according to claim 1, wherein the lithium transition metal oxide particles have a layered structure.

6. The positive electrode active material according to claim 1, wherein a region from a surface of the lithium transition metal oxide particle to a depth of 30 nm from the surface contains zinc (Zn).

7. The positive electrode active material according to claim 1, wherein, when a total content of nickel (Ni), tantalum (Ta), and zinc (Zn) present in a region from a surface of the lithium transition metal oxide particle to a depth of 15 nm from the surface is taken as 100%, a content of zinc (Zn) present in the region is 0.4% or more to less than 1%.

8. The positive electrode active material according to claim 1, wherein, when a total content of nickel (Ni), tantalum (Ta), and zinc (Zn) present in a region from a surface of the lithium transition metal oxide particle to a depth of 25 nm from the surface is taken as 100%, a content of zinc (Zn) present in the region is 0.3% to 0.9%.

9. The positive electrode active material according to claim 1, wherein the lithium transition metal oxide particles have a particle diameter of 2 µm to 50 µm.

10. The positive electrode active material according to claim 1, wherein the lithium transition metal oxide particles comprise at least one compound selected from the group consisting of LiₐA_{1-b}R_{b}D₂ (0.90≤a≤1.8, 0≤b≤0.5); LiₐE_{1-b}R_{b}O_{2-c}D_{c} (0.90≤a≤1.8, 0≤b≤0.5, 0≤c≤0.05); LiE_{2-b}R_{b}O_{4-c}D_{c} (0≤b≤0.5, 0≤c≤0.05); LiₐNi_{1-b-c}Co_{b}R_{c}D_{d} (0.90≤a≤1.8, 0≤b≤0.5, 0≤c≤0.05, 0<d≤2); LiₐNi_{1-b-c}Co_{b}R_{c}O_{2-d}Z_{d} (0.90≤a≤1.8, 0≤b≤0.5, 0≤c≤0.05, 0<d<2); LiₐNi_{1-b-c}Co_{b}R_{c}O_{2-d}Z₂ (0.90≤a≤1.8, 0≤b≤0.5, 0≤c≤0.05, 0<d<2); LiₐNi_{1-b-c}Mn_{b}R_{c}D_{d} (0.90≤a≤1.8, 0≤b≤0.5, 0≤c≤0.05, 0<d≤2); LiₐNi_{1-b-c}Mn_{b}R_{c}O_{2-d}Z_{d} (0.90≤a≤1.8, 0≤b≤0.5, 0≤c≤0.05, 0<d<2); LiₐNi_{1-b-c}Mn_{b}R_{c}O_{2-d}Z₂ (0.90≤a≤1.8, 0≤b≤0.5, 0≤c≤0.05, 0<d<2); LiₐNi_{b}E_{c}G_{d}O₂ (0.90≤a≤1.8, 0≤b≤0.9, 0≤c≤0.5, 0.001≤d≤0.1.); LiₐNi_{b}Co_{c}Mn_{d}GₑO₂ (0.90≤a≤1.8, 0≤b≤0.9, 0≤c≤0.5, 0≤d≤0.5, 0.001≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMnG_{b}O₂ (0.90≤a≤1.8, 0.001≤b≤0.1); LiₐMn₂G_{b}O₄ (0.90≤a≤1.8, 0.001≤b≤0.1); QO₂; QS₂; LiQS₂; V₂O₅; LiV₂O₅; LiTO₂; LiNiVO₄; Li_{(3-f)}J₂(PO₄)₃ (0≤f≤2); Li_{(3-f)}Fe₂(PO₄)₃ (0≤f≤2); and LiFePO₄,
wherein A is Ni, Co, Mn, or any combination thereof,
R is Al, Ni, Co, Mn, Cr, Fe, Mg, Sr, V, a rare earth element, or any combination thereof,
D is O, F, S, P, or any combination thereof;
E is Co, Mn, or any combination thereof,
Z is F, S, P, or any combination thereof,
G is Al, Cr, Mn, Fe, Mg, La, Ce, Sr, V, or any combination thereof,
Q is Ti, Mo, Mn, or any combination thereof;
T is Cr, V, Fe, Sc, Y, or any combination thereof, and
J is V, Cr, Mn, Co, Ni, Cu, or any combination thereof.

11. The positive electrode active material according to claim 1, wherein a molar ratio of lithium (Li): tantalum (Ta): zinc (Zn) in the coating layer is 3: 1: 1.

12. The positive electrode active material according to claim 1, wherein the coating layer comprises zinc oxide particles.

13. The positive electrode active material according to claim 1, wherein the coating layer comprises lithium tantalum oxide particles.

14. The positive electrode active material according to claim 1, wherein the coating layer comprises at least one of LiTaO₃ and Li₃TaO₄.

15. The positive electrode active material according to claim 1, wherein the lithium secondary battery is an all-solid-state battery.

16. The positive electrode active material according to claim 15, wherein the all-solid-state battery is a sulfide-based all-solid-state battery.

17. A method for producing a positive electrode active material for a lithium secondary battery, comprising steps of:
preparing lithium transition metal oxide particles;
preparing a precursor mixture comprising a lithium (Li) precursor, a tantalum (Ta) precursor, and a zinc (Zn) precursor;
coating the lithium transition metal oxide particles with the precursor mixture; and
heat-treating the lithium transition metal oxide particles, coated with the precursor mixture, under an oxygen atmosphere.

18. The method according to claim 17, wherein
the lithium (Li) precursor is an oxide containing lithium,
the tantalum (Ta) precursor is an oxide containing tantalum, and
the zinc (Zn) precursor is an oxide, ammonium salt or acetate containing zinc.

19. The method according to claim 17, wherein the precursor mixture is a solution phase prepared by adding the lithium precursor, the tantalum precursor, and the zinc precursor to a solvent, followed by stirring.

20. The method according to claim 17, wherein the precursor mixture comprises the precursors such that a molar ratio of lithium (Li): tantalum (Ta): zinc (Zn) is 3: 1: 1.

21. The method according to claim 17, wherein the heat-treating is performed at a temperature of 300°C to 1,000°C.

22. The method of claim 17,
wherein the positive electrode active material produced by the method comprises lithium transition metal oxide particles and a coating layer positioned on the lithium transition metal oxide particles,
wherein the coating layer comprises zinc oxide particles and lithium tantalum oxide particles.

23. A lithium secondary battery, comprising: a positive electrode comprising the positive electrode active material according to claim 1; a negative electrode; and an electrolyte.

24. The lithium secondary battery according to claim 23, wherein the electrolyte is a sulfide-based solid electrolyte.

25. The lithium secondary battery according to claim 24, wherein the sulfide-based solid electrolyte comprises at least one selected from the group consisting of Li₆PS₅Cl, Li₂S-SiS₂, LiI-Li₂S-SiS₂, LiI-Li₂S-P₂S₅, LiI-Li₂S-B₂S₃, Li₃PO₄-Li₂S-Si₂S, Li₃PO₄-Li₂S-SiS₂, LiPO₄-Li₂S-SiS, LiI-Li₂S-P₂O₅, LiI-Li₃PO₄-P₂S₅, and Li₂S-P₂S₅.
